Europäisches Patentamt

European Patent Office

Office européen des brevets

(19)

(11) Numéro de publication : **0 085 004**
**B1**

(12)  **FASCICULE DE BREVET EUROPÉEN**

(45) Date de publication du fascicule du brevet :
09.10.85

(51) Int. Cl.⁴ : **B 60 R   1/04**

(21) Numéro de dépôt : 83400139.8

(22) Date de dépôt : 20.01.83

(54) **Dispositif de fixation d'un accessoire, notamment d'un rétroviseur sur un pare-brise ou une glace de véhicule.**

(30) Priorité : 21.01.82 FR 8200919

(43) Date de publication de la demande :
03.08.83 Bulletin 83/31

(45) Mention de la délivrance du brevet :
09.10.85 Bulletin 85/41

(84) Etats contractants désignés :
DE GB IT

(56) Documents cités :
FR-A- 2 042 181
FR-A- 2 210 958
FR-A- 2 229 233
FR-A- 2 292 884
FR-A- 2 354 218
FR-A- 2 456 640
GB-A- 1 360 410

(73) Titulaire : Manzoni-Bouchot Société anonyme dite:
Zone Industrielle "Le Plan d'Acier" Boîte Postale No 9
F-39200 Saint-Claude (FR)

(72) Inventeur : Manzoni, Stéphane
1, rue Pasteur
F-39200 Saint-Claude (FR)

(74) Mandataire : Moulines, Pierre et al
Cabinet BEAU de LOMENIE 55, rue d'Amsterdam
F-75008 Paris (FR)

Jouve, 18, rue St-Denis, 75001 Paris, France

EP 0 085 004 B1

## Description

La présente invention a pour objet un dispositif de fixation d'un accessoire, notamment d'un rétroviseur sur un pare-brise ou une glace de véhicule.

Pour la fixation d'un rétroviseur sur le pare-brise d'un véhicule, on utilise actuellement une embase qui est assujettie au pare-brise par collage, ledit rétroviseur présentant un organe de support qui est monté sur l'embase par un moyen de liaison. Il est connu de réaliser ces embases en métal par moulage en cire perdue ou sous pression. On a également essayé d'utiliser une embase en matière plastique collée sur le pare-brise ; toutefois, en raison de la différence entre les coefficients de dilatation du matériau plastique de l'embase et du verre du pare-brise, l'embase se décollait très rapidement.

Le brevet FR-A-2 229 233 concerne une embase réalisée entièrement en zamak, toutefois on rencontre les mêmes inconvénients que précédemment en raison de la grande différence entre les coefficients de dilatation du zamak et du verre du pare-brise.

Le brevet FR-A-2 456 640 concerne une embase en acier qui donne de bons résultats pour sa fixation sur le pare-brise, en raison du fait que l'acier présente le coefficient de dilatation le plus proche de celui du verre.

Toutefois, l'embase tout en acier est lourde et la réalisation de l'embase en acier moulé est coûteuse.

Conformément à la présente invention, l'élément métallique présentant la forme d'un U est en acier et il est noyé par ses deux ailes dans l'embase en matière plastique de manière à constituer avec celle-ci une seule pièce dont l'une des faces apparente est constituée par la partie plane médiane de l'élément métallique en U non recouverte de matière plastique qui constitue la surface de collage.

Cette disposition permet de fixer solidement par collage l'embase en matière plastique sur le pare-brise par sa partie métallique en acier.

De plus, en utilisant une feuille d'acier pliée en U noyée dans une embase en matière plastique, il est possible d'abaisser fortement le prix de revient de l'embase tout en garantissant la qualité de fixation du rétroviseur.

Par ailleurs, l'embase réalisée suivant l'invention présente un poids inférieur à celui d'une embase métallique.

D'autres caractéristiques et avantages de l'invention seront mieux compris à la lecture de la description qui va suivre d'un mode de réalisation et en se référant aux dessins annexés, sur lesquels :

la figure 1 est une vue en perspective du montage d'un rétroviseur intérieur sur une embase collée sur le pare-brise d'un véhicule ;

la figure 2 est une vue en élévation d'une embase perfectionnée suivant l'invention ;

la figure 3 est une vue en coupe de l'embase suivant la ligne III-III de la figure 2 ;

la figure 4 est une vue en coupe de l'embase suivant la ligne IV-IV de la figure 2.

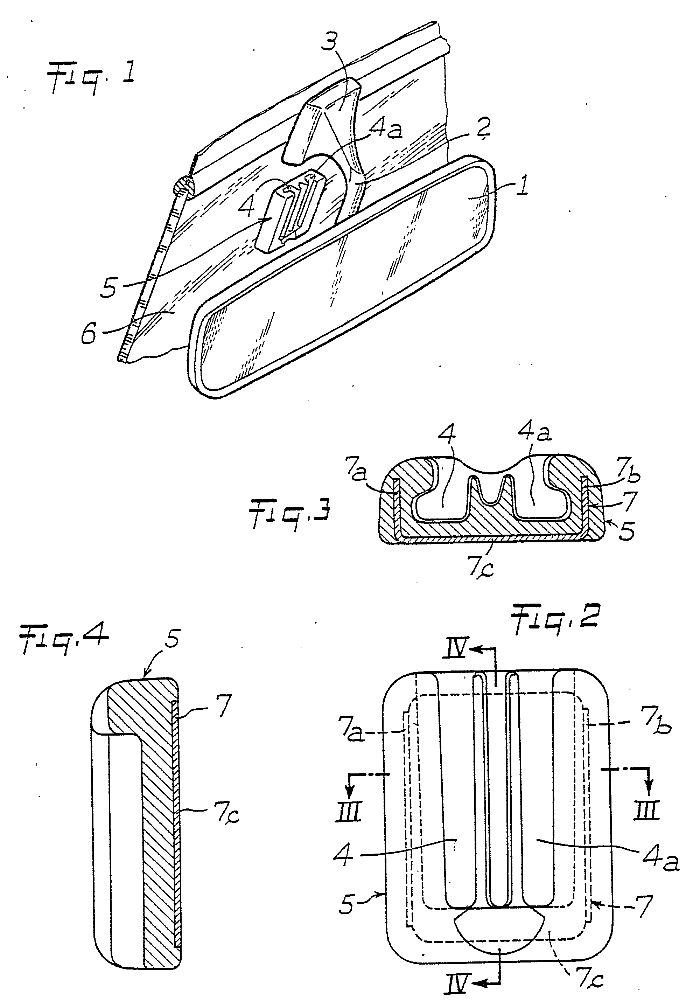

A la figure 1, on a représenté un rétroviseur intérieur 1 qui est monté de façon articulée sur une patte 2 présentant à son extrémité un organe de fixation comportant des nervures non représentées au dessin qui sont engagées par coulissement dans des rainures correspondantes 4, 4a d'une embase 5 qui est collée par sa face postérieure sur le pare-brise 6 d'un véhicule.

Conformément à l'invention, l'embase 5 est réalisée en matière plastique notamment par moulage et elle comporte un élément métallique 7 en forme de U dont les ailes 7a, 7b sont noyées dans la matière plastique par surmoulage ou par agrafage.

La partie plate médiane 7c de l'élément métallique n'est pas recouverte par la matière plastique de telle façon que, à sa partie postérieure, l'embase 5 présente une face métallique comportant un bon coefficient de collage sur le pare-brise 6 en verre du véhicule.

L'élément métallique 7 peut être réalisé notamment en tôle d'acier pliée pour présenter la forme d'un U.

Bien entendu, l'invention n'est pas limitative et l'homme de l'art pourra y apporter des modifications sans sortir pour cela du domaine de l'invention.

## Revendications

1. Dispositif de fixation d'un accessoire, notamment d'un rétroviseur sur un pare-brise ou une glace de véhicule, dans lequel l'accessoire comporte un organe de support qui est monté par un moyen de liaison sur une embase assujettie au pare-brise ou à la glace par collage, l'embase (5) en matière plastique comportant un élément métallique (7) dont une face (7c) constitue la surface de collage de l'embase sur le pare-brise (6), caractérisé en ce que l'élément métallique (7) présentant la forme d'un U est en acier et est noyé par ses deux ailes (7a, 7b) dans l'embase (5) en matière plastique de manière à constituer avec celle-ci une seule pièce dont l'une des faces apparente est constituée par la partie plane médiane (7c) de l'élément métallique en U non recouverte de matière plastique qui constitue la surface de collage.

2. Dispositif suivant la revendication 1, caractérisé en ce que l'élément (7) est constitué d'une feuille d'acier en forme de U noyée avec ses deux ailes (7a, 7b) dans la matière plastique par surmoulage.

3. Dispositif suivant la revendication 1, caractérisé en ce que l'élément métallique (7) est consti-

tué d'une feuille d'acier noyée avec ses deux ailes (7a, 7b) dans la matière plastique par agrafage.

## Claims

1. Device for fixing an accessory part, such as a rearview mirror, on a windscreen or a vehicle window, in which the accessory part comprises a supporting member mounted via connecting means on a base plate adhesively fixed to the windscreen or to the window, said base plate (5) in plastic material comprising a metallic element (7) of which one face (7c) constitutes the adhering surface of the base plate on the windscreen (6), characterized in that the U-shaped metallic element (7) is made of steel and is embedded by way of its two wings (7a, 7b) in the base plate in plastic material so as to constitute with the latter a single piece, of which one of the apparent faces is constituted by the median flat part (7c) of the U-shaped metallic element non coated with plastic material, which constitutes the adhering surface.

2. Device according to claim 1, characterized in that the element (7) is constituted by a U-shaped steel sheet embedded by way of its two wings (7a, 7b) in the moulded over plastic material.

3. Device according to claim 1, characterized in that the metallic element (7) is constituted by a steel sheet embedded by way of its two wings (7a, 7b) in the plastic material by clamping means.

## Patentansprüche

1. Vorrichtung zum Befestigen eines Zubehörteils, insbesondere eines Rückspiegels auf der Windschutzscheibe oder einem Fenster eines Fahrzeugs, wobei das Zubehörteil ein Trägerelement aufweist, das über ein Verbindungsglied an einem an der Windschutzscheibe oder dem Fenster angeklebten Befestigungssockel angebracht ist und der Befestigungssockel (5) aus Kunststoff besteht und ein Metallstück (7) aufweist, wovon eine Fläche (7c) die Klebefläche des Befestigungssockels auf der Windschutzscheibe (6) bildet, dadurch gekennzeichnet, daß das Metallstück (7) U-förmig ist, aus Stahl besteht und mit seinen beiden Schenkeln (7a, 7b) so in den aus Kunststoff bestehenden Befestigungssockel eingelassen ist, daß es mit diesem ein einziges Teil bildet, dessen eine Außenfläche von der mittleren ebenen Fläche (7c) des U-förmigen, nicht mit Kunststoff bedeckten Metallstücks (7) gebildet wird, die die Klebelfläche darstellt.

2. Vorrichtung nach Anspruch 1, dadurch gekennzeichnet, daß das Metallstück (7) aus U-förmigem Stahlblech besteht, und mit seinen beiden Schenkeln (7a, 7b) durch Ausgießen in den Kunststoff eingelassen ist.

3. Vorrichtung nach Anspruch 1, dadurch gekennzeichnet, daß das Metallstück (7) aus einem mit seinen beiden Schenkeln (7a, 7b) durch Zusammenklammern in den Kunststoff eingelassenes Stahlblech besteht.

_Fig. 1_

_Fig. 3_

_Fig. 4_

_Fig. 2_